# FASCICULE DE BREVET EUROPEEN

(11) **EP 1 618 079 B1**
(45) Date de publication et mention de la délivrance du brevet: **04.07.2007**
(21) Numéro de dépôt: 04742511.1
(22) Date de dépôt: 15.04.2004
(51) Int. Cl.: C04B 35/573

(54) **L'UTILISATION D'UN MATERIAU CERAMIQUE A BASE DE CARBURE DE SILICIUM DANS LES MILIEUX AGRESSIFS**
VERWENDUNG EINES AUF SILICIUMCARBID BASIERENDEN KERAMIKWERKSTOFFS IN AGGRESSIVEN UMGEBUNGEN
USE OF A SILICON CARBIDE-BASED CERAMIC MATERIAL IN AGGRESSIVE ENVIRONMENTS

(30) Priorité: 16.04.2003 FR 0304749
(43) Date de publication de la demande: 25.01.2006
(73) Titulaire: SICAT, 75008 Paris (FR); CENTRE NATIONAL DE LA RECHERCHE SCIENTIFIQUE, 75794 Paris Cedex 16 (FR); Université Louis Pasteur de Strasbourg, F-67000 Strasbourg (FR)
(72) Inventeur: PHAM-HUU, Cuong, F-67700 Saverne (FR); NGUYEN, Patrick, F-67000 Strasbourg (FR); PHAM, Charlotte, F-67700 Saverne (FR); LEDOUX, Marc, Jacques, F-67000 Strasbourg (FR)
(74) Mandataire: Gaucherand, Michel
(86) Numéro de dépôt international: PCT/FR2004/000929
(87) Numéro de publication internationale: WO 2004/094339

(56) Documents cités:
- EP-A- 0 356 800
- US-A- 3 205 043
- US-A- 4 455 385
- US-A- 4 514 346
- US-A- 4 562 040
- US-A- 5 196 389
- US-A- 5 474 587
- US-A- 5 560 809
- US-A1- 2002 011 683
- US-B1- 6 245 424
- DATABASE COMPENDEX [Online] ENGINEERING INFORMATION, INC., NEW YORK, NY, US; HUANG QINGWEI ET AL: "Microstructure of reaction-bonded silicon carbide" XP002264185 Database accession no. E2000455311603 & HSI AN CHIAO TUNG TA HSUEH;HSI-AN CHIAO TUNG TA HSUEH/JOURNAL OF XI'AN JIAOTONG UNIVERSITY FEB 2000, vol. 34, no. 2, février 2000 (2000-02), pages 89-91, 99,

## Description

### Domaine technique de l'invention

La présente invention concerne les matériaux céramiques pour utilisation dans des milieux agressifs, tels qu'ils se présentent notamment en génie chimique et électrométallurgique, et plus particulièrement les briques réfractaires utilisées dans des fours de fusion ou des cuves d'électrolyse.

### Etat de la technique

Les métaux liquides et les sels fondus sont parmi les agents chimiques les plus agressifs connus. De nombreux procédés industriels métallurgiques et électrométallurgiques faisant intervenir la fusion de métaux et / ou sels, il existe un besoin de matériaux réfractaires qui résistent à un tel environnement. Les équipements pour métaux fondus ou sels fondus, typiquement des fours de fusion ou des cellules d'électrolyse en sel fondu, nécessitent comme revêtement intérieur de grandes quantités de plaques ou briques réfractaires, et le remplacement desdites pièces réfractaires, aussi appelé le regarnissage, immobilise l'équipement pendant une certaine durée. Un matériau qui présente une durée de vie améliorée dans un tel environnement peut donc conduire à au moins trois avantages : 1) une moindre consommation en matériau réfractaire, 2) une moindre contamination du milieu fondu par ledit milieu réfractaire, et 3) une durée d'immobilisation de l'équipement pour maintenance (« down-time ») réduite.
Par ailleurs, ces matériaux doivent résister aux chocs thermiques et mécaniques susceptibles de survenir lors de leur utilisation dans un tel équipement.

Le carbure de silicium de structure α, qui cristallise dans un système hexagonal, lié à d'autres stabilisant inorganiques, est un des matériaux les plus utilisés dans les industries diverses comme céramique de revêtement grâce à ses propriétés mécaniques et thermiques exceptionnelles, et grâce à sa bonne résistance chimique vis-à-vis des agents corrosifs, essentiellement des alcalins. On exige souvent de briques réfractaires en α-SiC pour utilisation dans des cuves d'électrolyse en sel fondu une porosité ouverte aussi faible que possible, afin de minimiser la pénétration du milieu corrosif à l'intérieur du matériau réfractaire (voir le brevet US 5 560 809 (Saint-Gobain)).

Ce matériau peut être obtenu sous diverses formes macroscopiques telles que brique, cylindre ou monolithe, choisies en fonction de l'application visée. La mise en forme du carbure de silicium fait intervenir en général d'un côté des poudres ou des agrégats à base de carbure de silicium, et de l'autre côté des liants inorganiques. A titre d'exemple, pour fabriquer des briques réfractaires pour cuves d'électrolyse électrométallurgique, on utilise comme liant soit l'oxyde d'aluminium en solution solide dans du Si₃N₄ qui correspond à la formule Si₃₋ₓAlₓOₓN₄₋ₓ, soit l'oxynitrure de silicium Si₂ON₂, soit le nitrure de silicium Si₃N₄. La mise en forme est réalisée ensuite par un procédé permettant de lier d'une manière intime les composés constituants le composite final, tel que le frittage à chaud.

Ce matériau composite présente une combinaison intéressante de propriétés physiques et chimiques, tels qu'une forte résistance mécanique (notamment résistance à la rupture et dureté), une forte résistance thermique (notamment un faible coefficient de dilatation et une forte stabilité thermique), et une forte résistance à l'oxydation, grâce à laquelle le matériau peut être utilisé à l'air libre à des températures dépassant 1000°C.. Ce matériau résiste également aux solutions faiblement alcalines.

Il souffre aussi de certains inconvénients. Son coût relativement élevé est lié à l'utilisation de températures élevées lors de la synthèse. En ce qui concerne sa résistance en milieu corrosif, on observe pour certains types de liants une fragilisation vis-à-vis de certains agents chimiques fortement corrosifs initialement présents dans le milieu d'utilisation, ou formés dans le milieu d'utilisation. On observe en effet que lors de certaines applications de ce matériau, la présence de produits corrosifs, tels que les acides ou des composés fluorés ou les produits fortement basiques, entraîne une destruction progressive des composés constituants le liant. Cela conduit à terme à la dissolution totale dudit liant, et par conséquence à la destruction de la forme macroscopique du matériau ; ainsi la pièce en α-SiC, par exemple une brique réfractaire, se transforme en poudre et/ou agrégats, avec perte de sa forme et de ses caractéristiques mécaniques initiales.

Deux voies ont été explorées dans l'art antérieur pour protéger les composites à base de SiC contre la corrosion : le recouvrement des pièces en céramique à base de SiC avec une couche protectrice plus résistante à la corrosion, et l'utilisation de liants plus résistants à la corrosion..

La première voie est représentée par la demande de brevet FR 2 806 406 A1 (Commissariat à l'Energie Atomique). Elle décrit un procédé de dépôt d'une couche sur la surface de composites à base de SiC, tels que le SiC fritté sans pression, le SiC infiltré Si, le SiC recristallisé poreux, afin de les protéger contre la corrosion et d'augmenter leur résistance chimique lors de l'usage à une température jusqu'à 1600°C. Le procédé mis en oeuvre consiste à préparer un mélange en dispersant dans un liant organique liquide les différents constituants de la couche de dépôt, i.e. métal ou siliciure, Si, SiC et/ou du carbone, puis à recouvrir la surface de la pièce à protéger par ledit mélange. L'ensemble est ensuite chauffé à une température comprise entre 1200 et 1850°C. Le recouvrement de la surface de la pièce en SiC à traiter est réalisé par fusion dudit mélange sur la surface de ladite pièce à traiter. Le dépôt ainsi formé a une épaisseur moyenne allant de 1 à 50 µm. La nature et la résistance du dépôt varie en fonction de la nature dudit métal et de la composition de la couche appliquée. Néanmoins, les exemples donnés ne concernent que des compositions de la couche de dépôt et l'observation de ce dernier par microscopie électronique sans qu'il y ait plus d'informations sur la résistance accrue du dit composite vis-à-vis de l'oxydation ou des milieux agressifs qui constituent le but final recherché.

Un inconvénient spécifique de cette voie est la possible apparition de microfissures entre la couche protectrice et le composite lors de la fabrication ou l'utilisation de pièces ainsi revêtues, due à des différences entre les coefficients d'expansion thermique.

La deuxième voie est basée sur l'idée que c'est la nature chimique des liants utilisés dans les matériaux céramiques à base de SiC qui détermine leur résistance à l'attaque par des agents chimiques agressifs tels que les dérivés fluorés ou des acides concentrés
ou des alcalins. Selon l'état de la technique, on utilise surtout des liants à base d'oxydes frittables, des nitrures ou des oxynitrures.

Dans les procédés connus, on utilise le carbure de silicium de structure α sous forme de poudre issue directement des synthèses par carboréduction traditionnelle selon la réaction (1):

SiO₂ + 3 C → α-SiC (ou β-SiC) + 2 CO (1)

La réaction (1) peut être décomposée en deux réactions élémentaires qui sont les suivantes:

SiO₂ + C -> SiO + CO (2)

SiO + 2 C -> SiC + CO (3)

Cependant, le SiO s'échappe très rapidement du milieu réactionnel avant que la réaction (3) ne soit complète et de ce fait, entraîne une perte non négligeable du silicium de départ en laissant une grande quantité de carbone non réagit dans le matériau final. Le brevet US 4,368,181 (Hiroshige Suzuki) propose d'améliorer ce procédé en faisant réagir des fines particules de carbone, i.e. diamètre moyen de l'ordre de 60 µm, et de silice, i.e. diamètre moyen de l'ordre de 150 µm, dans un dispositif permettant le recyclage continu afin de diminuer la perte en silicium par perte de SiO et d'augmenter le rendement en SiC. Cependant, le SiC ainsi formé par ce procédé est toujours sous forme de poudre très fine et nécessite une autre étape de préformage avec des liants avant utilisation. Ces liants sont susceptibles d'être corrodés par des solutions fortement acides ou basiques avec comme conséquence la destruction de la structure macroscopique du matériau.

Par ailleurs, on connaît du brevet EP 511 919 un procédé de fabrication de supports de catalyseur en SiC poreux sous forme de bâtonnets ou granules extrudés à partir d'un mélange de poudre de silicium et de résine organique par polymérisation suivie d'une carburation.

Les demandes de brevets ou brevets US 5 474 587 (Forschungszentrum Julich GmbH), US 2002/011683 A1 (Corning Inc), EP 0 356 800 A (Shinetsu Chemical Co), US 4 455 385 (General Electric Co), US 4 562 040 (Sumitomo), US 4 514 346 (Kernforschungsanlage Jülich), US 6 245 424 (Saint-Gobain Industrial Ceramics) et US 3 205 043 (The Carborundum Company) illustrent également la fabrication et l'utilisation de tels matériaux à base de SiC.

### Problème posé

La présente invention cherche à surmonter ces inconvénients des procédés selon l'art antérieur. Elle vise à proposer des produits de revêtement intérieur pour fours industriels et cuves d'électrolyse en matériau céramique à base de carbure de silicium, qui présentent une meilleure résistance aux attaques de milieux corrosifs, notamment aux milieux fluorés, aux acides concentrés ou aux milieux alcalins, tout en conservant les propriétés physiques exceptionnelles connues du SiC.

### Description des figures

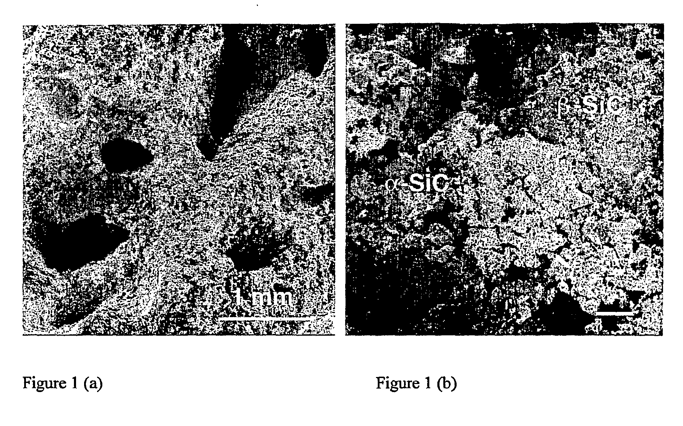

La figure 1 montre des images de microscopie électronique à balayage du composite après carburation sous vide dynamique à 1300°C pendant 2 heures. Le mouillage des grains de α-SiC par la matrice β-SiC est visible sur l'image de microscopie présentée sur la Figure 1B.

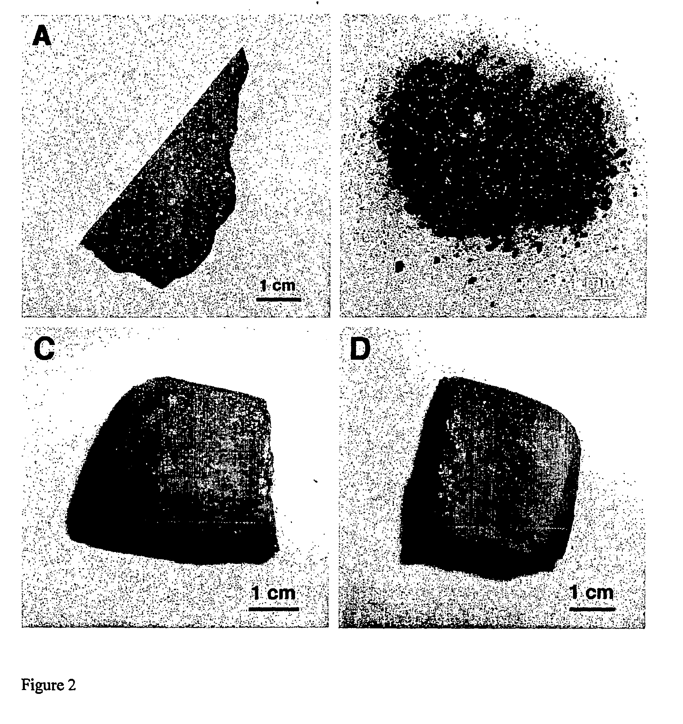

La figure 2 montre des images optiques d'un composite constitué d'agrégats à base de α-SiC avec des liants à base d'Al₂O₃ et de Si₃N₄ avant (A) et après (B) une trempe dans une solution d'HF à 40% volumiques pendant 10 heures. La dissolution des liants par le HF a entraîné la destruction totale de la structure macroscopique du matériau de départ.

Les images (C, D) correspondent à un composite constitué par des agrégats d'α-SiC dans une matrice de β-SiC ayant subi le même traitement que celui des images (A) et (B). On apprécie la forte résistance de ce matériau vis-à-vis des attaques par les solutions fortement corrosives.

### Objet de l'invention

La présente invention a comme objet l'utilisation d'un matériau composite à base de SiC comme revêtement intérieur de four de fusion d'aluminium ou comme revêtement intérieur de cuve d'électrolyse en sel fondu, caractérisée en ce que ledit matériau composite contient des inclusions, dont au moins une partie en α-SiC, dans une matrice de β-SiC.

### Description de l'invention

Le problème est résolu selon la présente invention par le remplacement des liants à base d'oxydes utilisés dans le procédés connus par une matrice constituée par du carbure de silicium de structure β (qui cristallise dans un système cubique à face centrée), et par l'addition d'inclusions

Un tel matériau peut être fabriqué avantageusement par un procédé qui comprend
(a) la préparation d'un mélange dit « mélange précurseur » comprenant au moins un précurseur du β-SiC, qui peut se présenter notamment sous forme de poudre, grains, ou fibres de taille diverses, avec au moins une résine carbonée, de préférence thermodurcissable,
(b) la mise en forme dudit mélange précurseur, notamment en plaques ou briques;
(c) la polymérisation de la résine,
(d) le traitement thermique à une température entre 1100 et 1500°C pour éliminer les constituants organiques de la résine et former la pièce finale.

On appelle « précurseur du β-SiC » un composé qui forme dans les conditions du traitement thermique (étape (d)) avec les constituants de la résine du β-SiC. Comme précurseur du β-SiC, on préfère le silicium, et plus particulièrement sous forme de poudre. Cette poudre de silicium peut être une poudre du commerce, de granulométrie et de pureté connues. Pour des raisons d'homogénéité, la granulométrie de la poudre de silicium est préférablement comprise entre 0,1 et 20 µm, de préférence entre 2 et 20 µm et plus spécialement entre 5 et 20 µm.

On appelle « résiné carbonée » toute résine contenant des atomes de carbone. Il n'est ni nécessaire ni utile qu'elle contienne des atomes de silicium. Avantageusement, le silicium est apporté uniquement par le précurseur du β-SiC. La résine est avantageusement sélectionnée parmi les résines thermodurcissables contenant du carbone, et notamment parmi les résines phénoliques, acryliques, ou furfuryliques. Une résine de type phénolique est préférée.

Dans le mélange précurseur, on ajuste les quantités respectives de résine et de précurseur du β-SiC de façon à transformer le précurseur du β-SiC quantitativement en β-SiC. A cette fin, on calcule la quantité de carbone contenue dans la résine. Une partie du carbone peut également être apportée par ajout direct d'une poudre de carbone dans le mélange de résine carbonée et du précurseur du β-SiC. Cette poudre de carbone peut être une poudre du commerce, par exemple du noir de carbone, de granulométrie et de pureté connues. Pour des raison d'homogénéitié du mélange, une granulométrie inférieure à 50 µm est préférée. Le choix de la composition du mélange résulte d'un compromis entre la viscosité, le coût des matières premières et la porosité finale désirée. Pour assurer la transformation totale du précurseur du β-SiC en β-SiC et permettre ainsi l'obtention d'un matériau final exempt de Si non engagé dans la structure du SiC, un léger excès de carbone est préféré dans le mélange précurseur. Cet excès de carbone peut ensuite être brûlé sous air. Néanmoins, l'excès de carbone ne doit pas être trop élevé afin de ne pas générer une porosité trop important à l'intérieur du matériau après combustion du carbone résiduel induisant ainsi une fragilisation dans la tenue mécanique du composite final. On peut procéder à une deuxième infiltration du composite ainsi synthétisé par le mélange résine/Si, afin de diminuer la porosité au coeur du composite. Cela est utile pour certaines applications qui nécessitent impérativement de minimiser la porosité.

Le mélange précurseur peut être mis en forme par tout procédé connu tel que moulage, pressage, extrusion pour obtenir des formes tridimensionnelles telles que des briques, plaques, ou carreaux. La méthode choisie sera adaptée à la viscosité du mélange précurseur, elle-même fonction de la viscosité de la résine et de la composition du mélange précurseur. A titre d'exemple, il est possible d'obtenir par exemple des plaques d'une épaisseur de 1 mm et d'une longueur et largeur de un à plusieurs décimètres. On peut également fabriquer des briques d'une dimension de quelques centimètres à quelques décimètres ou plus. On peut également obtenir des pièces de formes plus complexes, notamment par moulage.

Ledit mélange précurseur est ensuite chauffé sous air à une température comprise entre 100°C et 300°C, préférentiellement comprise entre 150°C et 300°C, plus préférentiellement comprise entre 150°C et 250°C, et encore plus préférentiellement comprise entre 150°C et 210°C. La durée de ce traitement, au cours duquel s'effectuent la polymérisation de la résine et le durcissement de la pièce, est typiquement comprise entre 0,5 heures et 10 heures au palier de température, de préférence entre 1 h et 5 h, et encore plus préférentiellement entre 2 et 3 heures. Lors de cette étape, le matériau dégage des composés organiques volatiles qui créent une porosité résiduelle variable en fonction du taux de carbone présent dans la composition du mélange précurseur et des conditions appliquées lors de la polymérisation. Il est préférable de minimiser cette porosité, surtout pour la fabrication de plaques épaisses (épaisseur typiquement d'au moins 2 mm) et de briques. On obtient ainsi une pièce intermédiaire qui a une certaine tenue mécanique et qui peut de ce fait être manipulée aisément.

Ladite pièce intermédiaire ainsi obtenue est soumise à un chauffage sous atmosphère inerte (par exemple hélium or argon) ou sous vide dynamique entre 1100°C et 1500°C pendant une durée allant de 1 à 10 heures, de préférence entre 1 et 5 heures et plus spécialement entre 1 et 3 heures afin de réaliser la carbonisation de la résine puis la réaction de carburation de la matrice. La plage optimale de température est de préférence située entre 1200°C et 1500°C, plus spécialement entre 1250°C et 1450°C. La plage la plus préférée se situe entre 1250 °C et 1400 °C. Le SiC formé à partir du carbone provenant de la résine et du précurseur du β-SiC est du β-SiC.

Lorsque le traitement de carburation est effectué sous gaz inerte, la présence de traces d'oxygène est préférable, surtout lorsque la résine présente un excès de carbone. Dans ce cas, la carburation peut être réalisée par exemple sous une atmosphère contenant des traces d'oxygène. Dans certains cas, l'oxygène provenant des impuretés de l'argon commercial peut suffire. Dans le cas où le produit après carburation présente un taux de carbone résiduel important, celui-ci peut être facilement éliminé par chauffage de la pièces sous air à une température comprise entre 600°C et 900°C, de préférence entre 700°C et 825°C, pendant une durée avantageusement comprise entre 10 minutes et 5 heures.

La demanderesse a constaté que la vitesse de polymérisation influe sur la porosité résiduelle dans le matériau final, car une polymérisation trop rapide favorise la formation de bulles de gaz. Or, la présence de bulles de gaz dans la résine peut favoriser la formation de microfissures dans le composite céramique, susceptibles de fragiliser la pièce matériau durant son utilisation. Ce problème peut se poser notamment lors de fabrication de plaques d'une épaisseur d'au moins 1 mm, et de briques. Il est donc utile de réaliser la polymérisation d'une manière assez lente, c'est-à-dire à une température modérée.

Pour la première étape d'infiltration, le procédé préféré fait intervenir une résine carbonée, mais ne nécessite pas l'utilisation d'une résine organique à base de silicium, telles que le polycarboxysilane ou le polymethylsilane, qui sont utilisées dans des procédés connus de fabrication de céramiques incorporant des fibres de SiC ; voir EP 1 063 210 A1 (Ishikawajima-Harima Heavy Industries, Ltd.) ; ces résines organiques à base de silicium sont relativement chères, et on observe une perte notable de carbone après pyrolyse.

Le procédé décrit ci-dessus permet la fabrication de briques ou plaques réfractaires à base de β-SiC sans inclusions. Lorsque l'on n'ajoute pas d'inclusions (par exemple sous forme de α-SiC), lesdites briques ou plaques réfractaires ont une densité typiquement de l'ordre de 1,5 g/cm³. Cette valeur est trop faible pour certaines utilisation en milieu corrosif, et notamment en milieu fluoré.

Dans un mode de réalisation avantageux, on fabrique des plaques d'une épaisseur d'au moins 1 mm, préférentiellement d'au moins 3 mm, et de façon encore plus préférée d'au moins 5 mm. La plus petite section desdites plaques est avantageusement d'au moins 15 mm², et préférentiellement d'au moins 50 mm², avec un rapport de longueur ou largeur sur épaisseur d'au moins 10 et préférentiellement d'au moins 15. Dans un autre mode de réalisation avantageux, on fabrique des briques. La plus petite dimension desdites briques est avantageusement d'au moins 10 mm, et de façon préférée d'au moins 50 mm ou même 100 mm. La plus petite section desdites briques est avantageusement d'au moins 20 cm², préférentiellement d'au moins 75 cm² et encore plus avantageusement d'au moins 150 cm², avec un rapport de longueur ou largeur sur épaisseur d'au moins 3.
Dans les deux cas, il convient de limiter l'excès de carbone et de polymériser lentement pour éviter la formation de grandes bulles susceptibles de fragiliser le matériau lors de sa carburation. Pour l'utilisation du matériau comme revêtement intérieur de four industriel, on prépare le matériau surtout sous forme de plaques ou briques, qui peuvent avoir la forme d'un parallélépipède ou toute autre forme appropriée.

La demanderesse a constaté que pour l'utilisation du matériau dans des fours industriels ou cuves d'électrolyse, il est particulièrement avantageux d'ajouter au mélange précurseur des inclusions dont au moins une partie est constituée de α-SiC. Dans ce cas, l'étape (a) indiquée ci-dessus est remplacée par l'étape (aa) :
(aa) la préparation d'un mélange précurseur comprenant des inclusions, dont au moins une partie est constituée de α-SiC, et un précurseur du β-SiC, qui peuvent se présenter sous forme de poudre, de grains, de fibres ou d'inclusions de taille diverses, avec une résine carbonée, de préférence thermodurcissable.

Typiquement, on utilise comme inclusions du α-SiC de granulométrie variable allant de 0,1 à plusieurs millimètres. Ce carbure de silicium de forme alpha peut consister en l'un des quelconques carbures de silicium connus à ce jour. Les inclusions sont ajoutées au mélange précurseur en une proportion d'au moins 80% (en poids par rapport à la masse totale du mélange précurseur). Au-dessous de 80%, la densité de la pièce finie est trop faible, sa porosité ouverte est trop élevée, et la pièce verte (pièce formée avant cuisson) est trop molle. Au-dessus de 95%, le liant en β-SiC ne peut plus mouiller complètement les inclusions, ce qui se traduit par une cohésion insuffisante de la pièce finie. Une fraction d'environ 90% d'inclusions convient bien à la plupart des applications en milieu corrosif fluoré.

Une partie du α-SiC peut être remplacée par de l'alumine, de la silice, du TiN, du Si₃N₄ ou d'autres solides inorganiques qui ne se décomposent pas et ne subliment pas aux température de synthèse du composite final. Avantageusement, au moins 50 % et préférentiellement au moins 70% en poids des inclusions sont constitués de α-SiC. Selon les constatations de la demanderesse, pour l'utilisation du matériau comme revêtement intérieur de cuves d'électrolyse d'aluminium ou comme revêtement intérieur d'un four de fusion d'aluminium, la substitution du α-SiC par d'autres inclusions inorganiques n'apporte pas d'avantage technique significatif.

Le solide constituant les inclusions ne se limite pas à une forme macroscopique précise mais peut être utilisé sous différentes formes telles que poudre, grains, fibres. A titre d'exemple, pour améliorer les propriétés mécaniques du composite final, on préfère comme inclusions les fibres à base de α-SiC. Ces fibres peuvent avoir une longueur qui dépasse 100 µm.

Ces inclusions, dont au moins une partie doit être constituée de α-SiC, sont mélangées avec une résine carbonée, de préférence thermodurcissable, contenant une quantité donnée d'un précurseur du β-SiC, de préférence sous forme de poudre de granulométrie allant de 0,1 à plusieurs micromètres.

On obtient ainsi un matériau composite de type α-SiC / β-SiC, comprenant des particules de α-SiC dans une matrice de β-SiC, qui n'a pas besoin de contenir d'autres liants ou additifs.

Une deuxième traitement d'infiltration peut être effectué selon la même procédure décrite : trempage dudit matériau dans un moule contenant la résine, polymérisation puis finalement, traitement de carburation. Ladite résine doit contenir une quantité suffisante du précurseur de β-SiC, par exemple sous forme de poudre de silicium. Ce deuxième traitement permet d'améliorer la résistance mécanique et/ou de supprimer les problèmes inhérents à la présence d'une porosité non désirable une meilleure résistance aux attaques de milieux corrosifs, notamment aux milieux fluorés, aux acides concentrés ou aux milieux alcalins.

Le traitement thermique est également simplifié car le composite peut être formé d'une manière indifférente soit sous vide dynamique soit sous atmosphère inerte, i.e. argon, hélium sans qu'il y ait besoin d'un contrôle précis de la pureté de la dite atmosphère, i.e. trace d'oxygène ou de vapeur d'eau présentes comme impuretés dans le gaz utilisé. De plus, la réaction de carburation procède par nucléation à l'intérieur même de la matrice carbone/silicium et de ce fait, est complètement indépendante de la dimension du composite à fabriquer.

Dans une variante préférée du procédé, le carbone et le silicium sont intimement mélangés de la manière suivante: la poudre de silicium (taille de grains moyenne d'environ 10 µm), est mélangée à une résine phénolique qui, après polymérisation, fournit la source de carbone nécessaire à la réaction de formation du β-SiC. Les inclusions sont mélangées ensuite avec la résine puis le tout est coulé dans un moule ayant la forme du composite final désiré. Après polymérisation le solide formé est transféré dans un four permettant de réaliser la carburation finale de la matrice. Durant la montée en température, l'oxygène de structure ou piégé dans la matrice réagit avec le silicium et le carbone pour former du SiO (équation (4)) et du CO (équation (5)) à l'intérieur même de la matrice solide. La carburation procède ensuite par réaction entre SiO et le carbone (6) ou CO avec Si (7) selon les équations suivantes:

2 Si + O₂ → 2 SiO (4)

2C + O₂ → 2CO (5)

SiO + 2C → SiC + CO (6)

2 CO + 2 Si → 2 SiC + O₂ (7)

Le fait que tous les constituants se trouvent intimement mélangés augmente d'une manière considérable le rendement final en SiC avec très peu de perte de silicium dans la phase gaz. La méthode de synthèse permet également de fabriquer du SiC avec une forme macroscopique prédéfinie et non sous forme d'une poudre fine comme c'était le cas avec les résultats de l'art antérieur.

Le procédé décrit ci-dessus permet de réaliser des matériaux ou composites avec une matrice à base de β-SiC pouvant contenir à l'intérieur des inclusions à base de carbure de silicium ou autres matériaux résistants à des utilisations en milieux agressifs, fortement acides ou basiques, et sous des fortes contraintes de températures.

Le matériau composite à base de SiC qui contient dans une matrice de β-SiC des inclusions dont au moins une partie en α-SiC, a de nombreux avantages :
(i) Il peut être fabriqué par le procédé décrit ci-dessus avec un coût de revient relativement bas par rapport à d'autres procédés, compte tenu des coûts des matières premières (résine constituant la source de carbone, poudre de silicium) et grâce à une économie non négligeable en énergie, le procédé impliquant des températures relativement basses, i.e. ≤ 1400°C. Le nombre limité de matières premières permet également une réduction sensible du coût.
(ii) La mise en forme du mélange peut être effectuée de manière préférée avant la polymérisation par extrusion, moulage ou pressage. Elle est facile compte tenu de la nature du matériau de départ, à savoir une matrice visqueuse à base de résine, de poudre de silicium et d'inclusions sous forme de poudre et / ou grains de α-SiC dispersé. Ceci permet de préformer le matériau dans des formes relativement complexes. Alternativement, on peut mettre en forme la pièce par usinage après polymérisation de la résine, de préférence avant le traitement thermique (étape (d)).
(iii) La forte affinité chimique et physique entre les différents constituants du composite permet un meilleur mouillage des grains ou inclusions de α-SiC par la matrice à base de β-SiC. Cela est dû à leurs natures chimiques et physiques proches malgré leur différente structure cristallographique, i.e. α-SiC (hexagonal) et β-SiC (cubique). Ces similarités proviennent essentiellement de la spécificité de la liaison chimique Si-C qui régit la plupart des propriétés mécaniques et thermiques ainsi que la forte résistance aux agents corrosifs. Elles permettent également la réalisation de liaisons fortes entre les deux phases (matrice de β-SiC et inclusions) évitant les problèmes de rejet ou de décollement lors de l'utilisation sous contrainte. De plus, les inclusions α-SiC présentent un coefficient de dilatation thermique très proche de celui de la matrice en β-SiC, permettant d'éviter la formation de contraintes résiduelles susceptibles d'apparaître au sein du composite lors du traitement thermique ou lors du refroidissement ; cela évite la formation de fissures qui pourraient être dommageables pour la pièce finie notamment lors de son utilisation dans des fours de fusion d'aluminium ou dans des cuves d'électrolyse en sel fondu, et qui peuvent être difficile à détecter sur la pièce finie.
(iv) La demanderesse a constaté que le matériau composite décrit présente une résistance extrêmement élevée aux milieux corrosifs, notamment aux milieux fluorés, aux acides concentrés ou aux milieux alcalins. Cela est probablement dû à l'absence de liants présentant une plus faible résistance auxdits milieux corrosifs. Les pièces fabriquées en ce matériau ou composite permettent donc une meilleure économie d'utilisation. Plus particulièrement, dans un milieu agressif donné, la durée de vie des pièces en matériau composite est plus importante que celle des pièces à base de SiC utilisant des liants qui ne résistent pas bien à ces milieux agressifs. Cela améliore aussi la sécurité d'emploi des pièces en SiC, notamment leur étanchéité, et ouvre d'autres applications impossibles à envisager avec les matériaux à base de SiC dont les liants ne sont pas chimiquement inertes.
(v) En faisant varier la nature chimique et physique des inclusions, le procédé décrit permet également de préparer d'autres types de composite ne contenant pas seulement que du carbure de silicium mais d'autres matériaux tels que l'alumine, la silice ou tous autres composés, pourvus qu'ils puissent être dispersés dans la résine et qu'ils ne soient pas altérés lors de la synthèse. L'ajout de ces inclusions autres que du α-SiC, dans une proportion variable, permet de modifier les propriétés mécaniques et thermiques du composite final, i.e. amélioration du transfert thermique, de la résistance à l'oxydation ou du colmatage de pores. On peut ainsi adapter le matériau aux exigences précises de l'utilisation prévue.
(vi) En faisant varier la proportion des inclusions, et notamment le pourcentage massique de α-SiC, on peut faire varier la résistance thermique et mécanique du matériau, en fonction de l'application visée.

La demanderesse a trouvé que ce matériau à base de SiC contenant des inclusions, dont au moins une partie en α-SiC, dans une matrice de β-SiC, peut être utilisé, en particulier sous forme de plaques ou briques réfractaires, comme matériau de revêtement dans diverses applications relevant du génie thermique, du génie chimique et/ou du génie électrométallurgique devant répondre à fortes contraintes mécaniques et thermiques, et / ou en présence de liquides ou gaz corrosifs. Il peut être notamment utilisé dans des éléments constituants des échangeurs thermiques, des brûleurs, des fours, des réacteurs, ou des résistances de chauffage, notamment en milieu oxydant à moyenne ou haute température, ou dans les installations en contact avec des agents chimiques corrosifs. Il peut être utilisé également comme constituant dans certaines pièces utilisées dans les domaines de la technologie aéronautique ou spatiale et de transport terrestre. Il peut également être utilisé comme matériau entrant dans la fabrication des ustensiles utilisés comme support de creuset pour des applications hautes températures telles que la synthèse des barreaux de silicium monocristallin. Le matériau peut être utilisé comme revêtement intérieur de fours, tels que des fours de fusion d'aluminium, et comme garnissage de cuves d'électrolyse en sel fondu, par exemple pour la production d'aluminium par électrolyse à partir d'un mélange d'alumine et de cryolithe. Il peut également être utilisé comme composant d'un bouclier thermique dans un vaisseau spatial.

Une autre utilisation de ces matériaux est celle comme garnissage (revêtement intérieur) de fours d'incinération, tel que des fours d'incinération d'ordures ménagers. Lors de l'incinération, des gaz corrosifs (HF, HCl, Cl₂, NO, NO₂ SO₂, SO₃ etc) peuvent être formés ; ceux-ci peuvent attaquer le revêtement intérieur du four.

La densité du matériau décrit est préférentiellement supérieure à 2,4 g/cm³. Pour les utilisation indiquées, une densité comprise entre 2,45 et 2,75 g/cm³ convient particulièrement bien.

### Exemples

### Exemple 1: Réalisation de plaques en β-SiC sans inclusions

On mélange dans un malaxeur 1500 g de poudre de silicium (granulométrie centrée sur 7 µm), 560 g noir de carbone (granulométrie centrée sur 20 nm) et 1000 g de résine phénolique.

La pâte ainsi obtenue est ensuite comprimée entre deux surfaces planes pour obtenir une plaque d'épaisseur de 3 mm. Cette plaque est durcie par chauffage à 200 °C pendant 3 heures. Lors de cette étape, on observe une perte de poids correspondant à environ 10 % du poids initial de mélange. La pièce obtenue est facilement manipulable et présente un aspect de surface lisse.

Ladite pièce est ensuite soumise à un chauffage progressif sous balayage d'argon à pression atmosphérique jusqu'à 1360°C, puis elle est maintenue pendant une heure à cette température. On laisse enfin la pièce refroidir jusqu'à la température ambiante. Lors de cette étape, on observe une perte de poids correspondant à environ 13,5 % de la pièce durcie. L'aspect du matériau est noir car il contient encore environ 7 % de carbone libre. Celui-ci est ensuite éliminé par chauffage sous air à 700°C pendant 3 h. La plaque présente alors une couleur grise caractéristique du β-SiC pur. La densité de cette plaque était de 1,2 g/cm³. Elle ne montrait pas de fissures.

Par un procédé très similaire, on a fabriqué des briques réfractaires en β-SiC avec une plus petite dimension supérieure ou égale à 15 cm, sans fissures.

### Exemple 2: Réalisation de plaques en β-SiC avec inclusions en α-SiC (composite α-SiC / β-SiC)

### Variante (a)

4,5 g de poudre de silicium (diamètre moyen des particules : environ 7 µm) sont mélangés avec 5,5 g d'une résine phénolique constituant la source de carbone nécessaire à la carburation pour former du β-SiC destiné à jouer le rôle de liant dans le composite final. On ajoute à ce mélange comme source d'inclusions 7 g de α-SiC sous forme de poudre. Le mélange a été mis en forme par moulage.
L'ensemble est polymérisé sous air à 150°C pendant 2 h. La perte de masse au cours de cette polymérisation était de 2 grammes. Le solide ainsi obtenu est soumis à un traitement thermique sous vide dynamique à 1300°C avec une pente de montée en température de 5 °C min⁻¹. Lors de la montée en température, la résine polymérisée se carbonise et conduit, à haute température, à un squelette carboné en contact intime avec les grains de silicium, ce qui facilite la synthèse du SiC. Le composite est maintenu à cette température pendant 2 h afin de transformer le mélange de carbone provenant de la résine carbonisée et le silicium en β-SiC. Le composite obtenu est refroidi ensuite avec l'inertie thermique naturelle du four jusqu'à la température ambiante. La perte de masse au cours de cette étape de traitement thermique était de 1 gramme.

Le produit ainsi obtenu est composé d'un mélange de 50% de α-SiC et 50% de β-SiC dans lequel les agrégats de α-SiC sont dispersés de manière homogène dans une matrice à base de β-SiC. Il présente des propriétés physico-chimiques proches ou similaires de celles des composites à base d'agrégats de α-SiC dispersés dans une matrice d'alumine et de Si₃N₄. Les images obtenues par microscopie électronique à balayage du composite après polymérisation et après carburation sont présentées sur la Figure 1. L'image à basse résolution (fig. 1A) montre clairement une dispersion homogène des grains de α-SiC à travers la matrice constituée de β-SiC généré par la réaction à 1300°C entre le carbone de la résine et le silicium.

On observe également la présence d'une porosité résiduelle dans le composite final. Cette porosité résiduelle a probablement pour origine des contractions ayant lieu au coeur de la résine lors de l'étape de polymérisation. Cette porosité résiduelle peut être éliminée en ajustant la pente de chauffe lors de l'étape de polymérisation ou en utilisant une résine différente. Le mouillage entre les deux phases peut être mieux visualisé par l'image de microscopie à plus fort agrandissement présentée sur la Figure 1B. Ce mouillage est expliqué par les propriétés physico-chimiques très proches des deux matériaux qui inhibent les problèmes de rejets lors du traitement thermique comme c'était le cas avec d'autres liants n'ayant pas le même coefficient de dilatation thermique que le carbure de silicium à protéger.

Cette manière de préparer les composites permet de faire varier dans une large gamme le pourcentage massique d'α-SiC de départ, afin d'adapter les propriétés du composite, telles que sa résistance mécanique et sa porosité, aux applications visées.

### Variante (b) :

Dans une autre variante, on réalise un mélange de 4,5 g de poudre de silicium, 5,5 g de résine phénolique et 73 g de grains de α-SiC. Le Mélange est mis en forme par pressage de manière à ce que la résine et la poudre de silicium viennent combler l'essentiel du volume libre entre les grains de α-SiC.
On procède ensuite de manière identique à l'exemple 2(a).
Le produit obtenu est alors constitué d'un mélange de 91% de α-SiC liés par 9% de β-SiC et présente une densité de 2,5 g/cm³ avec une porosité ouverte inférieure à 20%.

### Exemple 3 : Utilisation des plaques en composite β-SiC / α-SiC en milieu corrosif

Cet exemple permet de mieux apprécier la résistance extrême du matériau composite à base de β-SiC avec inclusions (voir exemple 2) par rapport à un composite à base de α-SiC avec liants à base d'oxydes et / ou nitrures. On a utilisé à cette fin comme milieu corrosif une solution de HF à 40 % volumiques. Il est connu que les vapeurs ou liquides contenant de l'acide fluorhydrique sont extrêmement corrosifs pour les liants à base d'oxydes céramiques, causant de sévères problèmes de destruction de la matrice. Les résultats sont présentés dans la Figure 2.

Le composite α-SiC / liants à base d'oxydes et / ou nitrures (Figure 2A) est complètement détruit après le traitement dans la solution d'HF entraînant la destruction complète de la matrice et seule de la poudre de α-SiC de départ est récupérée (Figure 2B). Le composite α-SiC / β-SiC préparé selon l'exemple 2 (variante (a)) demeure stable, et aucune modification apparente n'a été détectée après le traitement dans l'HF (Figures 2C et D). Cela illustre l'inertie chimique de la matrice à base de β-SiC vis-à-vis de la solution de HF.

Par des essais analogues, la demanderesse a constaté que le composite à base de β-SiC avec inclusions résiste également à des traitements en milieux basiques tels que la soude concentrée à chaud. Le composite à base de α-SiC / liants à base d'oxydes et / ou nitrures est détruit après un traitement similaire, car la soude concentrée dissout les liants.

On a répété cet essai avec le matériau issu de la variante (b) de l'exemple 2. La résistance au HF était excellente.

## Revendications

1. Utilisation d'un matériau composite à base de SiC comme revêtement intérieur de four de fusion d'aluminium ou comme revêtement intérieur de cuve d'électrolyse en sel fondu ou comme revêtement intérieur d'un four d'incinération, **caractérisée en ce que** ledit matériau composite a été préparé à partir d'un mélange dit « mélange précurseur » comprenant au moins un précurseur du β-SiC et au moins une résine carbonée, et **en ce que** ledit matériau composite contient des inclusions, dont au moins une partie en α-SiC, dans une matrice de β-SiC.

2. Utilisation selon la revendication 1, dans laquelle la fraction pondérale desdites inclusions est comprise entre 80% et 95% par rapport à la masse totale du mélange précurseur.

3. Utilisation selon la revendication 1 ou 2, dans laquelle une partie desdites inclusions sont de l'alumine, de la silice, du TiN, du Si₃N₄ ou un mélange de ces composés.

4. Utilisation selon une quelconque des revendications 1 à 3, dans laquelle au moins 50% en poids desdites inclusions, et préférentiellement au moins 70% en poids desdites inclusion, sont de l'α-SiC.

5. Utilisation selon une quelconque des revendications 1 à 4, dans laquelle ledit matériau présente une densité d'au moins 2,4 g/cm³, et préférentiellement une densité comprise entre 2,45 et 2,75 g/cm³.

6. Utilisation selon une quelconque des revendications 1 à 5, dans laquelle ledit matériau est utilisé sous forme de brique ou plaques.

7. Utilisation selon une quelconque des revendications 1 à 6 comme garnissage de cuve d'électrolyse pour la production d'aluminium à partir d'un mélange d'alumine et de cryolithe.

## Claims

1. Use of a composite material based on SiC as interior lining of furnaces for melting aluminium, or as interior lining of electrolysis cells for molten salt electrolysis, or as interior lining of incineration furnaces,
wherein said composite material has been prepared from a mixture called "precursor mixture" comprising at least one precursor of β-SiC and at least one carbon-containing resin,
and wherein said composite material comprises inclusions, at least part of which are α-SiC, in a β-SiC matrix.

2. Use according to claim 1, wherein said inclusions amount to a mass fraction comprised between 80% and 95% of the total mass of the precursor mixture.

3. Use according to claim 1 or 2, wherein part of said inclusions are alumina, silica, TiN, Si₃N₄ or a mixture of these compounds.

4. Use according to any of claims 1 to 3, wherein at least 50 weight-%, and preferably at least 70 weight-% of said inclusions are α-SiC.

5. Use according to any of claims 1 to 4, wherein said material has a density of at least 2,4 g/cm³, and preferably a density comprised between 2,45 and 2,75 g/m².

6. Use according to any of claims 1 to 5, wherein said material is used as brick or plate.

7. Use according to any of claims I to 6 as lining of electrolysis cells for the production of aluminium from a mixture of alumina and cryolithe.

## Patentansprüche

1. Verwendung eines Verbundwerkstoffes auf SiC - Basis als innere Auskleidung von Aluminiumschmelzöfen, oder als innere Auskleidung für Elektrolysezellen für Schmelzflusselektrolyse, oder als innere Auskleidung für Verbennungsöfen,
wobei besagter Verbundwerkstoff aus einer "Vorstufen-Mischung" genannten Mischung hergestelllt wurde, welche wenigstens eine Vorstufe für β-SiC und mindestens ein kohlenstofthaltiges Harz enthält, und in dem besagter Verbundwerkstoff Einschlüsse enthält, die wenigstens zum Teil aus α-SiC bestehen,

2. Verwendung nach Anspruch 1, bei der die genannten Einschlüsse einen Massenanteil zwischen 80% und 95% der gesamten Masse der Vorstufen-Mischung ausmachen.

3. Verwendung nach Anspruch 1 oder 2, bei der die genannten Einschlüsse Tonerde, Siliziumdioxid, TiN, Si₃N₄ oder eine Mischung dieser Verbindungen sind.

4. Verwendung nach irgendeinem von Ansprüchen 1 bis 3, bei der wenigstens 50 Massenprozente, und vozugsweise wenigstens 70 Massenprozente der genannten Einschlüsse α-SiC sind.

5. Verwendung nach irgendeinem von Ansprüchen 1 bis 4, bei der der genannte Werkstoff eine Dichte von wenigstens 2,4 g/cm , und vorzugsweise zwischen 2,45 and 2,75 g/m² aufweist.

6. Verwensdung nach irgendeinem von Ansprüchen 1 bis 5, bei der der genannte Werkstoff als Baustein oder Platte verwendet wird.

7. Verwendung nach irgendeinem von Ansprüchen 1 bis 6 als Auskleidung einer Elektrolysezelle für die Herstellung von Aluminium aus einer Mischung aus Tonerde und Kryolith.
